# EUROPÄISCHE PATENTSCHRIFT

(11) **EP 4 088 987 B1**
(45) Veröffentlichungstag und Bekanntmachung des Hinweises auf die Patenterteilung: **20.03.2024**
(21) Anmeldenummer: 22171987.5
(22) Anmeldetag: 06.05.2022
(51) Int. Cl.: B62B 9/10, B62B 7/14, B62B 9/12

(54) **EINSATZ FÜR KINDER- ODER PUPPENWAGEN**
INSERT FOR CHILDREN'S OR DOLLS' BUGGIES
PIÈCE RAPPORTÉE POUR UNE VOITURE D'ENFANT OU DE POUPÉE

(30) Priorität: 11.05.2021 DE 102021112280
(43) Veröffentlichungstag der Anmeldung: 16.11.2022
(73) Patentinhaber: Beger, Oliver, 84030 Ergolding (DE)
(72) Erfinder: Beger, Udo, 84034 Landshut (DE)
(74) Vertreter: Pröll, Jürgen

(56) Entgegenhaltungen:
- DE-U1-202009 005 213
- DE-U1-202018 105 355
- US-B2- 8 899 615

## Beschreibung

Es wird ein Einsatz für Kinder- oder Puppenwagen mit den Merkmalen des Oberbegriffs des Patentanspruches 1 beschrieben, wobei der Einsatz in seiner Breite veränderlich ausgebildet ist.

### Hintergrund

Herkömmliche Einsätze für Kinderwagen sind in ihrer Größe festgelegt und lassen sich in ihrer Breite nicht verändern. Unter gewissen Umständen kann es jedoch erforderlich sein, den Einsatz eines Kinderwagens zu verbreitern oder zu verschmälern. So kann der Einsatz an das Wachstum des Kindes angepasst werden oder aber der Einsatz kann an ein Gestell eines Kinderwagens, an oder in welchem der Einsatz befestigt werden soll, angepasst werden.

Ein weiteres Problem bei Kinderwagen ist, dass diese entweder nur für ein Kind als Einzelwagen oder aber auch für zwei Kinder als sog. Zwillingswagen ausgelegt sind. Es kann ein Kinderwagen mit einem Einsatz für ein einzelnes Kind bei Bedarf nicht in ein Kinderwagen für zwei Kinder, mit zwei Einsätzen, die nebeneinander sitzend oder liegend im Kinderwagen transportiert werden sollen, mit zwei separat nebeneinander angeordneten Einsätzen umgewandelt werden. Hierdurch ist jeweils ein eigener Kinderwagen bzw. ein eigenes Kinderwagengestell erforderlich, was einerseits viel Platz erfordert und andererseits sehr kostenintensiv ist, da zwei Kinderwagen - zunächst ein Einzelkinderwagen und später ein Zwillingswagen - angeschafft werden müssen.

### Stand der Technik

Aus der US 8,899,615 B2 ist ein Buggy zum Transportieren von Kindern bekannt, der einen Rahmen mit ersten Befestigungselementen zum lösbaren Befestigen einer ersten Last aufweist. Hierzu weist die erste Last eine erste Haltevorrichtung zur Aufnahme eines Kindes auf. Weiterhin ist der Rahmen mit zweiten Befestigungselementen zum lösbaren Befestigen einer zweiten Last versehen. Die Breite des Rahmens des Buggys ist zwischen einer ersten, relativ kleinen Rahmenbreite und einer zweiten, relativ große Rahmenbreite einstellbar. Die zweiten Befestigungselemente sind derart konfiguriert, dass diese sowohl in der ersten Rahmenbreite als auch in der zweiten Rahmenbreite zum lösbaren Befestigen der zweiten Last neben der ersten Last verwendbar sind. Aus der US 6,550,802 B2 ist ein Joggingkinderwagen bekannt, der von einer Einzelsitzeinheit zu einer Doppelsitzeinheit erweiterbar ist. Der Joggingkinderwagen weist eine U-förmige Lenkerstangenanordnung mit einem Greifbereich mit einer darin befindlichen Trennfuge zum Öffnen und Auseinanderspreizen der Lenkerstange, einen Lenkerstangeneinsatz, der innerhalb der Trennfuge des Greifbereichs angeordnet ist, um eine breitere Lenkerstangenanordnung zur Aufnahme eines zusätzlichen Sitzes zu schaffen, auf. Weiterhin ist eine Hinterachsanordnung mit einer Achse mit gegenüberliegenden Enden vorhanden, wobei jedes Ende einen großen Luftreifen trägt und die Achse eine Trennfuge zum Öffnen und Auseinanderspreizen der Achse aufweist. Weiterhin ist ein Achseneinsatz vorhanden, der innerhalb der Trennfuge der Achse angeordnet ist, um eine breitere Hinterachsachsanordnung zu schaffen. Außerdem sind entsprechende Mittel zum Verbinden der Lenkerstangenanordnung mit der Hinterachsanordnung vorhanden. Außerdem weist der Joggingkinderwagen eine Vorderradanordnung auf, welche aus einem Vorderradrahmen, einem Gehäuses mit einer vorderen Endhülse, Mittel zum Verbinden der Lenkerstangenanordnung mit der Vorderradanordnung und Mittel zum Verbinden der Hinterachsanordnung mit der Vorderradanordnung besteht. Es ist eine Mittelstange mit einem rumpfwärts gelegenen Ende vorgesehen, welche mit dem Lenkerstangeneinsatz verbunden ist, und ein distales Ende, das mit der vorderen Endhülse des Gehäuses verbunden ist, um eine strukturelle Längsunterstützung für den Joggingkinderwagen bereitzustellen, wenn sich der Joggingkinderwagen im Doppelsitzmodus befindet. Schließlich ist ein Verstrebungselement vorhanden, dessen unteres Ende mit dem Achseneinsatz und dessen oberes Ende mit dem Lenkstangeneinsatz reibschlüssig verbunden ist, um eine vertikale Abstützung für den Kinderwagen im Zweisitzmodus bereitzustellen.

Aus der WO 2001/024759 A1 ist eine Gehhilfe für Personen mit eingeschränkter Gehfähigkeit bekannt, die ein erstes und ein zweites Seitenteil aufweist. Die beiden Seitenteile sind über an den zwei Seitenteilen angebrachte Querstangen verbunden, wobei die Querstangen relativ zueinander parallel bewegt werden können und so eine Einstellung des Abstands zwischen dem ersten Seitenteil und dem zweiten Seitenteil ermöglicht wird, sodass die Breite der Gehhilfe variierbar ist. Die Gehhilfe weist zusätzlich Räder und Griffstangen auf. Die Querstangen werden unter Verwendung einer durch ein Zahnrad mit einem Handgriffhebel gebildete Einstelleinrichtung gegenseitig bewegt, wobei die Einstelleinrichtung an wenigstens einer Stange an dem zweiten Seitenteil angeordnet ist. Das Zahnrad greift in Zähne ein, die an der Querstange an dem ersten Seitenteil angeordnet sind, und welche mit der Querstange mit dem Zahnrad verbunden ist.

Aus der DE 20 2018 105 355 U1 ist eine Babywanne zum Transportieren eines Säuglings mit einer manuell greifbaren Tragvorrichtung, einer mechanischen Lagervorrichtung und einem Boden mit einer Innenfläche zum Aufnehmen des Säuglings und einer gegenüberliegenden Außenfläche zum Abgrenzen der Babywanne bekannt. Darüber hinaus werden auch ein mit der Babywanne zusammenwirkendes Kinderwagengestell sowie ein die Babywanne sowie das Kinderwagengestell aufweisendes Kinderwagenset offenbart. Die Tragvorrichtung kann hierbei einen Fußbügel, einen Kopfbügel sowie einen Tragbügel aufweisen, die jeweils um eine gemeinsame, verstellbare Gelenkmechanik verschwenkbar sind. So kann die Tragvorrichtung von einer Spannstellung, bei der gleichzeitig ein Himmel aufgespannt wird, in eine Verstaustellung verbracht werden.

### Aufgabe

Es ist daher Aufgabe einen Einsatz für Kinder- oder Puppenwagen bereitzustellen, welcher in seiner Breite veränderbar ausgebildet ist, sodass der Einsatz entsprechend seiner Verwendung angepasst werden kann.

### Lösung

Die vorstehende Aufgabe wird mit den Merkmalen des Patentanspruchs 1 gelöst.

Weitere vorteilhafte Ausgestaltungen der Erfindung sind in den auf den Patentanspruch 1 rückbezogenen Patentansprüchen angegeben.

Die vorliegende Erfindung beschreibt einen Einsatz für Kinderoder Puppenwagen zur Aufnahme wenigstens eines Kindes in eine Sitz- und/oder Liegeposition mit einem obenliegenden, wenigstens zwei Längs- und wenigstens zwei Querholme aufweisenden Rahmen, welcher mit zwei einander gegenüberliegenden Adaptern, angeordnet an jeweils wenigstens einem der Längsholme, verbunden ist, wobei die Adapter derart ausgebildet sind, um diese mit einem Gestell eines Kinder- oder Puppenwagens zu verbinden. Die Breite des Einsatzes im Bereich der Adapter ist durch in ihrem Abstand zueinander variierbar ausgebildeten Längsholmen veränderlich ausgebildet, wobei die Adapter über wenigstens eine längenveränderliche Querverbindung miteinander verbunden sind.

In einer vorteilhaften Ausgestaltung der Erfindung nach Patentanspruch 2 ist vorgesehen, dass die Adapter jeweils ein Adaptergelenk aufweisen. Dadurch sind die Einsätze gegenüber den Adaptern neigbar.

In einer vorteilhaften Ausgestaltung der Erfindung nach Patentanspruch 3 ist vorgesehen, dass die wenigstens zwei Längsholme und/oder die wenigstens zwei Querholme biegbar und/oder zueinander verwindbar ausgebildet sind. Dadurch kann die Variabilität der Breite des Einsatzes dadurch ausgebildet werden, dass die wenigstens zwei Querholme auseinandergezogen bzw. gespreizt werden.

Die wenigstens zwei Querholme und die wenigstens zwei Längsholme bilden einen obenliegende Rahmen und gestalten dadurch den oberen Abschluss des Einsatzes aus. Hierbei bildet der Rahmen von oben gesehen eine im Wesentlichen rechteckige Form aus. Das heißt einerseits, dass die Rechteckform spitze oder abgerundete Ecken aufweist, und andererseits, dass die Rechteckform statt gerader Seiten leicht nach außen gewölbte Seiten aufweist. Es müssen hierbei nicht alle Seiten gleichermaßen gerade oder leicht gewölbt sein. Es ist vorteilhaft auch denkbar, dass die kurzen Seiten gerade und die langen Seiten des Rahmens in der Rechteckform leicht gewölbt ausgebildet sind. Als leicht gewölbt wird eine Krümmung zwischen null und maximal dem reziproken Umkreisradius der ausgebildeten Rechteckform des Rahmens beschrieben. Kommen hingegen nur zwei Längsholme zu Einsatz, so bilden diese einen im wesentlichen ovalen Rahmen aus.

In einer vorteilhaften Ausgestaltung nach Patentanspruch 4 ist vorgesehen, dass die wenigstens zwei Längsholme und/oder die wenigstens zwei Querholme als einteiliger Rahmen oder als zwei separate, einteilige U-Profile ausgebildet sind, wobei die Schenkel der U-Profile die wenigstens zwei Längsholme sind und wobei die zwei U-Profile in die Adapter oder Adaptergelenke zu einem Rahmen einsetzbar sind.

Die Adapter weisen vorteilhaft jeweils ein Adaptergelenk auf, sodass ein Adaptergelenk ein Teil eines Adapters ist. Vorteilhaft sind die Schenkel der U-Profile in die Adaptergelenke der Adapter zu einem Rahmen einsetzbar. Hierdurch kann der Rahmen über die Adaptergelenke verschwenkt werden.

Als Holme - gemeint sind die wenigstens zwei Längs- und die wenigstens zwei Querholme gleichermaßen - sind allgemein längserstreckte Trägerprofile zu verstehen, wobei diese in ihrer Längserstreckung gerade oder auch gebogen ausgeführt sein können. Hierbei weisen die Holme in ihrer Querschnittsfläche in einer vorteilhaften Ausgestaltung eine Kreisform auf. Es ist ebenfalls denkbar, dass die Querschnittsfläche eine ovale Form oder aber auch eine polyedrische Form, wie bspw. eine Dreiecks-, Vierecks, Fünfecks- oder Sechsecksform, aufweist. Hierbei können Längsund Querholme auch unterschiedlich ausgebildete Querschnitte aufweisen. Besonders vorteilhaft weisen die Holme ein Hohlprofil auf. Im einfachsten Fall sind sie als Rohr ausgebildet.

Vorteilhaft können die Holme aus Metall, Kunststoff, einem Faser-Kunststoff-Verbund - wie bspw. glasfaserverstärktem Kunststoff oder aber auch kohlenstofffaserverstärktem Kunststoff - oder aus einer Kombination der genannten Materialien ausgebildet sein. Hierdurch ist es vorteilhaft möglich, einen besonders leichten Rahmen bereitzustellen, welcher gleichzeitig besonders haltbar und stabil ist, aber auch kostengünstig hergestellt werden kann.

Die Adapter sind an den jeweils wenigstens zwei Längsholmen angeordnet. Daher weist der Einsatz auch wenigstens zwei Adapter auf. Über diese Adapter ist der Rahmen mit einem Gestell eines Kinder- oder Puppenwagens verbindbar. Die Verbindung ist hierbei vorteilhaft als eine Steck-, Klick- bzw. Rastverbindung ausgebildet. Das heißt, die Adapter werden auf Verbindungselemente wie bspw. Zapfen oder Bolzen oder andere Verbindungsmittel aufgesteckt, wobei an den Adaptern entsprechend zu den Verbindungselementen korrespondierende Aufnahmen ausgebildet sind. Gleichzeitig weisen die Adapter und/oder die Verbindungselemente des Gestells des Kinder- oder Puppenwagens einen Rastmechanismus auf, welcher bei vollständigem Aufstecken einrastet und die Adapter fest mit dem Gestell verbindet. Die Rastverbindung ist über entsprechende Betätigungsmittel wie bspw. Druckknöpfe an den Adaptern oder am Gestell wieder lösbar.

Die Adapter sind über wenigstens eine längenveränderliche Querverbindung miteinander verbunden. Sie sind von oben betrachtet orthogonal zu den Längsholmen ausgerichtet, bezogen auf den Verbindungspunkten von Adaptern und Längsholmen. Es ist ebenfalls denkbar, dass im Sinne einer erhöhten Stabilität mehrere längenveränderliche Querverbindungen parallel zueinander zwischen den Adaptern angeordnet sind. Die längenveränderliche Querverbindung ist vorteilhaft teleskopartig ausgebildet. Sie ist teleskopartig auseinanderziehbar oder teleskopartig zusammenschiebbar ausgebildet.

Im einfachsten Fall kann die wenigstens eine längenveränderliche Querverbindung als ein erstes Hohlprofil, wie bspw. ein Rohr, ausgebildet sein, welches wiederum ein weiteres Profil, welches entweder ein Vollprofil oder ebenfalls ein Hohlprofil sein kann. In jedem Fall ist der Innendurchmesser des ersten Hohlprofils größer als der Außendurchmesser des zweiten, weiteren Profils ausgebildet, um ineinander einsteckbar und verschiebbar zu sein. Es können aber auch für die wenigstens eine längenveränderliche Querverbindung zwei Hohlprofile vorgesehen sein, die in ihrer Mitte ein drittes Profil, welches als Voll- oder Hohlprofil ausgebildet sein kann, aufnehmen. Besonders vorteilhaft ist in den beiden äußeren Hohlprofilen jeweils ein Federelement aufgenommen, die jeweils eine Wirkverbindung zwischen Adaptern oder äußeren Hohlprofilen und dem dritten Profil in der Mitte ausbilden. Die Federelemente bewirken vorteilhaft eine symmetrische Kraftbeaufschlagung, d.h. von beiden Seiten, auf das dritte Profil in der Mitte, sodass dieses sowohl beim Zusammenschieben als auch beim Auseinanderziehen der teleskopartig ausgebildeten längenveränderlichen Querverbindung stets mittig zwischen den beiden äußeren Hohlprofilen angeordnet ist.

Es ist ebenfalls denkbar, dass die für die längenveränderliche Querverbindung vorgesehenen Profile, d.h. Hohlprofil und/oder Vollprofil, neben einer runden Form auch oval oder eckig ausgebildet sein können. Hierunter sind bspw. quaderförmige, quadratische oder dreieckige Profilformen zu verstehen. Das ist aber nicht beschränkend zu verstehen, sodass auch vieleckige Profile mit regelmäßiger oder unregelmäßiger Profilform vorgesehen sein können. Profil bzw. Profilform meint hier stets die Querschnittsform.

Die längenveränderliche Querverbindung wird durch die Breite des Gestells über die damit verbundenen Adapter in ihrer Länge vorgegeben und gehalten. Es ist vorteilhaft aber auch denkbar, dass die wenigstens eine längenveränderliche Querverbindung einen Rast- und/oder Feststellmechanismus aufweist, womit die Länge der Querverbindung auf ein vorbestimmbares Maß fest einstellbar ist und so die Breite des Einsatzes selbstständig gehalten wird ohne von der Breite des Gestells vorgegeben zu sein.

Weiterhin vorteilhaft begrenzt die wenigstens eine längenveränderliche Querverbindung die im Bereich der Adapter variierbare Breite des Einsatzes. Ist die wenigstens eine Querverbindung vollständig zusammengeschoben, so lässt sich die Breite des Einsatzes im Bereich der Adapter nicht weiter verringern. Gleiches gilt umgekehrt, wenn die wenigstens eine Querverbindung vollständig auseinandergezogen ist. Vorteilhaft weist die wenigstens eine längenveränderliche Querverbindung wenigstens ein Begrenzungsmittel auf, welches dazu geeignet ist, die Längenveränderung durch Auseinanderziehen und/oder durch Ineinanderschieben der wenigstens einen Querverbindung auf ein gewähltes Minimum bzw. Maximum zu beschränken.

Weitere vorteilhafte Ausgestaltungen des Einsatzes ergeben sich aus den Merkmalen der Unteransprüche. So sind in einer weiteren vorteilhaften Ausgestaltung des Einsatzes die wenigstens zwei Längsholme und/oder die wenigstens zwei Querholme biegbar und/oder zueinander verwindbar ausgebildet. Es ist alternativ auch denkbar, dass nur ein Längsholm biegbar ausgebildet ist. In jedem Fall führt die biegbare Ausbildung wenigstens eines Holms dazu, dass der Rahmen insgesamt eine derartige Flexibilität aufweist, dass dieser im Bereich der Adapter in seiner Breite durch Spreizung des Rahmens bzw. Biegung des wenigstens einen Längsholms ohne Weiteres verändert werden kann. Vorteilhaft reicht hierzu die Kraft einer erwachsenen Person aus. Etwaig auftretende Biegekräfte beim Verbringen des Rahmens von einer Grundposition in eine Spreizposition können hierbei vom Rahmen selbst aufgenommen werden. Die Verformung in Form der Breitenänderung des Rahmens im Bereich der Adapter ist reversibel ausgebildet. Das heißt, dass der wenigstens eine Holm sich unter Krafteinwirkung elastisch verformt. Mit Ausbleiben einer Krafteinwirkung kehrt der Rahmen in seinen Grundzustand zurück. Eine irreversible, plastische Verformung ist nicht vorgesehen und nicht Gegenstand des hier beschriebenen Einsatzes.

Die Biegbarkeit der wenigstens zwei Längsholme und/oder der wenigstens zwei Querholme oder aber alternativ auch nur eines Längsholms ist einerseits von dem gewählten Material der Längs- bzw. Querholme und andererseits vom Profil des Querschnitts abhängig. So führt eine hohe Materialstärke im Querschnittsprofil zu einer größeren Steifigkeit, d.h. zu einer schlechteren Biegbarkeit. Allgemein bestimmt die Form des Querschnittsprofils das sog. Flächenträgheitsmoment der Querschnittsfläche des Längs- bzw. Querholms. Hierbei ist es nicht unbedingt erforderlich, dass das Querschnittsprofil rotationssymmetrisch ausgebildet ist. Es können auch bezogen auf die Biegbarkeit der Läng- bzw. Querholme vorteilhafte Ausgestaltungen gewählt sein. So ist bspw. denkbar, dass eine Seite des Querschnittsprofils verstärkt ausgebildet ist. Vorteilhaft ist die Materialverstärkung im Querschnittsprofil zur Flächenmitte der Ebene, die der Rahmen aufspannt, zugewandt.

In einer weiteren vorteilhaften Ausgestaltung des Einsatzes sind die wenigstens zwei Längsholme und/oder die wenigstens zwei Querholme als einteiliger Rahmen oder als zwei separate, einteilige U-Profile ausgebildet, wobei die Schenkel der U-Profile die wenigstens zwei Längsholme sind und wobei die zwei U-Profile in die Adapter zu einem Rahmen einsetzbar sind. Die U-Profile können hierbei entweder gleichgroß oder unterschiedlich groß ausgebildet sein. Letztere Ausgestaltung ist vorteilhaft, da diese Rücksicht auf die Körperproportionen eines Kindes nimmt. Die Beine eines Kindes sind üblicherweise im Vergleich zum Rumpf und Kopf kürzer ausgebildet. Ist ein Kind in dem Einsatz in einer Sitz- und/oder Liegeposition aufgenommen, so ist es vorteilhaft, wenn ein U-Profil größer ausgebildet ist als das andere, um die entsprechend genannten Körperteile des Kindes aufnehmen zu können. Größer ausgebildet meint hier, dass die Schenkel der U-Form entsprechend länger ausgebildet sind.

Bei einer einteiligen und rechteckigen Ausbildung des Rahmens weist dieser zwei Längs- und zwei Querholme auf. Bei einer eckigen Rahmenform bilden an den Ecken die Längs- und Querholme Winkelverbindungen aus. Vorteilhaft sind die Winkelverbindungen biegbar bzw. elastisch ausgebildet. Hierzu ist denkbar, dass die Winkelverbindungen im Bereich der Biegung eine geringere Materialstärke aufweisen als an den Längs- und Querholmen des Rahmens. Auch ist denkbar, dass zusätzlich im Bereich der Biegung eine Achse angeordnet ist, um die die jeweilige Winkelverbindung bzw. die daran angeordneten Längs- und Querholme schwenkbar sind. Die Achse legt hierbei einerseits den Punkt fest, um welchen die Winkelverbindung verschwenkbar ist, und schafft andererseits Stabilität für die Winkelverbindung selbst. Es ist aber auch denkbar, dass die Winkelverbindungen steif ausgebildet sind, sodass eine Biegung bei Veränderung der Breite des Rahmens an den Längs- und/oder Querholmen erfolgt, die hierzu wenigstens zum Teil elastisch ausgebildet sind. Die sind vorteilhaft Winkelverbindungen nicht spitz, sondern abgerundet ausgebildet. Abgerundete Winkelverbindungen weisen erfahrungsgemäß eine erhöhte Stabilität gegenüber spitzen Winkelverbindungen auf.

Weiterhin ist es denkbar, dass die Winkelverbindungen wenigstens eine U- oder V-förmige Einkerbung im Bereich der Biegung aufweisen. Hierbei können die Einkerbungen am inneren Winkel oder aber auch am äußeren Winkel der Winkelverbindungen angeordnet sein. Die Einkerbungen haben den Vorteil, dass sie sich je nach Biegewinkel der Winkelverbindungen öffnen oder schließen. Sind die Einkerbungen durch eine den Biegewinkel verändernde Kraftbeaufschlagung vollständig geschlossen, ist eine weitere Veränderung des Biegewinkels nicht mehr möglich. Die Einkerbungen begrenzen somit vorteilhaft die maximale Biegewinkelverstellung der Winkelverbindungen. Die Einkerbungen können aber auch sowohl am inneren Winkel als auch am äußeren Winkel der Winkelverbindungen angeordnet sein, womit die maximale Biegewinkelverstellung der Winkelverbindungen sowohl in die die Winkelverbindung öffnende als auch schließende Bewegung begrenzen.

Die Winkelverbindungen zwischen Längs- und Querholmen sind im weitesten Sinne Gelenke, d.h. eine Winkelverbindung ist gleichzeitig ein Gelenk bzw. ein Gelenk kann gleichzeitig auch eine Winkelverbindung bei einer einteiligen Ausbildung des Rahmens sein.

Es ist alternativ auch denkbar, dass der Rahmen statt eine eckige Form eine ovale Form aufweist. Hierbei gehen Längs- und Querholme ohne Winkel auszubilden, der ovalen Form folgend, ineinander über. Es können dabei auch nur zwei Quer- oder zwei Längsholme vorgesehen sein, die jeweils so gebogen sind, dass sie jeweils ein halbes Oval ausbilden, wobei die Holme in den entsprechenden Scheitelpunkten des Ovals aufeinander stoßen.

Die Adapter sind hierbei jeweils im Scheitelpunkt, welche sich auf der Längserstreckung der Ovalform befinden, angeordnet.

In einer vorteilhaften Ausgestaltung nach Patentanspruch 5 ist vorgesehen, dass die wenigstens eine längenveränderliche Querverbindung gemeinsam mit den zwei Adaptern U-förmig ausgebildet ist, wobei die Adapter senkrechte Schenkel der U-Form sind. Die Adapter bilden hierbei die senkrecht nach oben gerichteten Schenkel der U-Form aus. Die längenveränderliche Querverbindung weist hierbei eine größere Länge bzw. aus Sicht der U-Form eine größere Breite auf, als die Adapter hoch sind.

Allgemein ist die hier für den Einsatz beschrieben U-Form bzgl. des zweiteilig ausgebildeten Rahmens und der Anordnung von Adaptern mit der wenigstens einen Querverbindung mit Toleranzen zu verstehen. So müssen die Schenkel der U-Form nicht unbedingt exakt parallel zueinander verlaufen. Sie können auch in einem Bereich von wenigen Winkelgrad, vorzugsweise zwischen 0° und höchstens 15° voneinander abweichen, sodass die Schenkel der U-Form V-förmig auseinander gehen können.

In einer vorteilhaften Ausgestaltung nach Patentanspruch 6 ist vorgesehen, dass die wenigstens zwei Längsholme mit den wenigstens zwei Querholmen jeweils über ein Gelenk miteinander verbunden sind und/oder die wenigstens zwei Längsholme jeweils über ein Gelenk mit jeweils einem der Adapter oder Adaptergelenke verbunden sind. Die Gelenke sind als bewegliche Verbindung zwischen den wenigstens zwei Längsholmen und den wenigstens zwei Querholmen bzw. zwischen den wenigstens zwei Längsholmen und den Adaptern oder Adaptergelenken ausgebildet. Bei der Verbindung von zwei Holmen ist das Gelenk gleichzeitig als eine Winkelverbindung ausgebildet, wobei die Freiheitsgrade des Gelenks derart ausgebildet sind, dass das Gelenk eine winkelverändernde Bewegung ausführen kann. Das Gelenk ist mit anderen Worten winkelveränderlich bewegbar ausgebildet. Dadurch können der jeweilige Längsholm und Querholm im Winkel zueinander bewegt werden.

Bei der Verbindung von Längsholm zu Adapter oder Adaptergelenk ist das Gelenk vorteilhaft als eine Längsverbindung ausgebildet, wobei das Gelenk winkelveränderlich und/oder längenveränderlich bewegbar ausgebildet ist. Insbesondere bei einer winkelveränderlich bewegbaren Ausbildung des Gelenks am Adapter oder Adaptergelenk ist vorteilhaft, dass hierdurch bei einer Veränderung der Breite des Einsatzes im Bereich der Adapter bzw. Adaptergelenke die durch die Verbreiterung bewirkte Winkelverstellung zwischen Adapter bzw. Adaptergelenke und Längsholm vom Gelenk aufgenommen werden.

Die Gelenke sind in einer vorteilhaften Ausgestaltung einteilig mit den Längs- und Querholmen ausgebildet. Besonders vorteilhaft sind die Gelenke hierbei als biegbare bzw. elastische Winkelverbindungen ausgebildet.

In einer vorteilhaften Ausgestaltung nach Patentanspruch 7 ist vorgesehen, dass die Gelenke als elastisch verformbare Winkelverbindungen zwischen den wenigstens zwei Längsholmen und den wenigstens zwei Querholmen und/oder als elastisch verformbare Längsverbindungen zwischen den wenigstens zwei Längsholmen und Adaptern ausgebildet sind. Es ist ebenfalls denkbar, dass der Rahmen bei einer einteiligen Ausbildung von den Adapter oder Adaptergelenken am jeweiligen Längsholm gelenkig aufgenommen ist, ohne separate Gelenke vorzusehen. Hierbei ist der Rahmen von den Adaptern oder Adaptergelenken derart aufgenommen, dass der Rahmen in den jeweiligen Aufnahmepunkten an den Adaptern oder Adaptergelenken Bewegungstoleranzen im Bereich weniger Winkelgrad zulässt, sodass die durch die Breitenveränderung bewirkte Winkelverstellung zwischen Längsholmen und Adaptern bzw. Adaptergelenken von den Adaptern bzw. Adaptergelenken selbst aufgenommen werden können. Im einfachsten Fall ist bspw. denkbar, dass der Rahmen an den Längsholmen des Rahmens jeweils wenigstens einen Zapfen aufweist, welcher senkrecht zur vom Rahmen aufgespannten Ebene ausgerichtet ist und vom jeweiligen Adapter oder Adaptergelenk über eine entsprechende Aussparung aufgenommen ist. So kann um die Zapfen herum eine winkelverändernde Bewegung der Längsholme bewirkt werden, ohne dass die Längsholme in ihrer Längsrichtung aus den Adaptern oder Adaptergelenken herausgleiten können. Statt der Zapfen können auch gleichwertige, formenschlüssige Lagerungen zwischen Längsholmen und Adaptern oder Adaptergelenken vorgesehen sein. So kann bspw. anstelle der Zapfen eine wellenabsatzförmige Umfangserweiterung an den Längsholmen vorgesehen sein, die in entsprechenden Aussparungen in den Adaptern oder Adaptergelenken angeordnet sind, wobei die Aussparungen jeweils mit einem gewissen Spielraum für die oben genannten Bewegungstoleranzen ausgestattet sind. Durch die gelenklose aber trotzdem gelenkige Aufnahme des Rahmens durch die Adapter bzw. Adaptergelenke kann der Einsatz vorteilhaft besonders einfach und kostengünstig aufgebaut werden.

Zur Aufnahme von Bewegungstoleranzen bzw. von Bewegungen um wenige Winkelgrad im Bereich der Adapter bzw. Adaptergelenke können vorteilhaft außerdem Gummi- oder Silikonpuffer vorgesehen sein. Ein solch genannter Puffer ist bspw. als eine Ringmanschette ausgebildet und umschließt die Längsholme im Bereich der Aufnahmepunkte an den Adaptern bzw. Adaptergelenken.

In einer weiteren vorteilhaften Ausgestaltung sind die Gelenke als verformbare Winkelverbindungen zwischen den wenigstens zwei Längsholmen und den wenigstens zwei Querholmen und/oder als verformbare Längsverbindungen zwischen den wenigstens zwei Längsholmen und Adaptern ausgebildet. Hierbei sind die Gelenke elastisch verformbar ausgebildet, sodass sie nach ihrer Verformung bei Weglassen äußerer Kraftbeaufschlagungen, die infolge einer Breitenveränderung bewirkt werden können, wieder in ihren ursprünglichen Zustand zurückkehren.

Eine plastische Verformung ist bei der hier beschrieben Ausbildung der Gelenke als verformbare Winkelverbindungen zwischen den wenigstens zwei Längsholmen und den wenigstens zwei Querholmen und/oder als verformbare Längsverbindungen zwischen den wenigstens zwei Längsholmen und Adaptern nicht vorgesehen.

In einer vorteilhaften Ausgestaltung nach Patentanspruch 8 ist vorgesehen, dass die Gelenke am Adapter oder Adaptergelenk als Aufnahmen für die wenigstens zwei Längsholme ausgebildet sind, wobei die Aufnahmen jeweils einen Freiheitsgrad in Querund/oder Längsrichtung zu den wenigstens zwei Längsholmen aufweisen. So sind die Längsholme in den Aufnahmen am Adapter oder Adaptergelenk derart bewegbar ausgebildet, dass sie zum Adapter/Adaptergelenk hin angewinkelt und/oder zum Adapter/Adaptergelenk hin oder vom Adapter/Adaptergelenk weg entlang der Längsrichtung bewegt werden können. Die Winkelachse verläuft hierbei vorteilhaft senkrecht zum Längsholm nach oben, d.h. entlang der Längserstreckung der Adapter. Die Längsholme sind hierbei dennoch über die Aufnahmen an den Adaptern mit diesen fest verbunden. Sie bilden jedoch statt einer starren Verbindung eine gelenkige und/oder verschiebbliche Verbindung aus.

In einer vorteilhaften Ausgestaltung nach Patentanspruch 9 ist vorgesehen, dass wenigstens ein Gelenk als ein Drehgelenk ausgebildet ist. Das wenigstens eine Drehgelenk weist hierbei eine Drehachse auf, die senkrecht zur vom Rahmen aufgespannten Ebene verläuft. Es weist einer der beiden Adapter oder Adaptergelenke wenigstens ein Gelenk auf, welches als Drehgelenk ausgebildet ist. Vorteilhaft ist hierbei, dass mit einem minimalen Einsatz von drehbeweglichen Komponenten ein in der Breite variierbarer Einsatz realisiert werden kann, was einerseits mögliche Fehler und Defekte in der Mechanik vermeidet und zusätzlich kostensparend in der Herstellung ist.

In einer vorteilhaften Ausgestaltung nach Patentanspruch 10 ist vorgesehen, dass die Gelenke wenigstens in einer Ebene drehbeweglich sind. Das heißt, dass die Gelenke jeweils um eine Drehachse drehbar sind, wobei die Drehachsen jeweils die gleiche Ausrichtung aufweisen. Vorteilhaft sind die Drehachsen senkrecht zur Ebene, die vom Rahmen aufgespannt wird.

In einer vorteilhaften Ausgestaltung nach Patentanspruch 11 ist vorgesehen, dass die Gelenke in wenigstens einer Position arretierbar sind. Die Gelenke rasten vorteilhaft in wenigstens eine Position ein, wobei die Gelenke jeweils einen vorbestimmbaren Winkel einnehmen. Besonders vorteilhaft sind die Gelenke in zwei Positionen arretierbar. Hierbei entsprechen die Positionen den Winkeln, die die Gelenke in der Grundposition und in der Spreizposition des Rahmens einnehmen. Hierdurch werden die einstellbaren Positionen des Rahmens vorteilhaft arretiert. Dies sorgt für eine hohe Stabilität des Rahmens sowohl in der Grund- als auch in der Spreizposition.

In einer vorteilhaften Ausgestaltung nach Patentanspruch 12 ist vorgesehen, dass die Breite des Einsatzes im Bereich der Adapter oder Adaptergelenke wenigstens in einem Bereich von 5 cm bis 9 cm veränderbar ist. Hierbei kann die Breite sowohl vergrößert als auch verringert werden. Vorteilhaft ist der Einsatz von einer Grundposition in eine breitere Spreizposition verbringbar. In der Grundposition ist die wenigstens eine längenveränderliche Querverbindung zwischen den zwei einander gegenüberliegenden Adaptern oder Adaptergelenken auf ein Minimum zusammengeschoben. In der Spreizposition ist die wenigstens eine längenveränderliche Querverbindung auf ein Maximum auseinandergeschoben. So ergibt sich eine Verbreiterung von der Grundposition hin zur Spreizposition von 5 cm bis 9 cm.

In einer vorteilhaften Ausgestaltung nach Patentanspruch 13 ist vorgesehen, dass die Breite des Einsatzes im Bereich der Adapter oder Adaptergelenke um 7 cm veränderbar ist. Es hat sich überraschenderweise gezeigt, dass eine Verbreiterung des Einsatzes im Bereich der Adapter oder Adaptergelenke um 7 cm von der Grundposition in die Spreizposition besonders vorteilhaft ist. Bei der Verbreiterung des Rahmens im Bereich der Adapter oder Adaptergelenke werden die wenigstens zwei Längsholme auseinander bewegt, sodass sich der Rahmen in seiner Längserstreckung entsprechend verkürzt. Das heißt, dass sich die wenigstens zwei Querholme des Rahmens aufeinander zubewegen. Die Verkürzung liegt hierbei in einem Bereich, welcher vorteilhaft tolerabel ist, da ein in der Sitzund/oder Liegeposition befindliches Kind im Einsatz nicht beeinträchtigt wird. Die Verkürzung in der Längserstreckung des Rahmens ist praktisch vernachlässigbar klein.

Die Türbreiten in Europa sind, zumindest für übliche Wohnhäuser, standardmäßig auf eine Durchgangsbreite von 80 cm genormt. Hieran orientiert sich die minimale Breite eines Kinderwagengestell mit entsprechendem Einsatz. Damit ein Kinderwagengestell mit zwei Einsätzen nebeneinander durch eine Tür passen, darf die Breite eines Einsatzes in der Grundposition 38 cm nicht überschreiten. Vielmehr ist es vorteilhaft, wenn die Breite in der Grundposition in einem kleinen Toleranzbereich von wenigen Zentimetern, was 4 cm bis 10 cm sind, stets kleiner als 40 cm ist, sodass ein Kinderwagengestell gemeinsam mit zwei nebeneinander angeordneten Einsätzen nicht breiter als 80 cm ist und somit knapp aber bequem durch eine 80 cm breite Tür passt. Vorteilhaft weist ein Einsatz in der Spreizposition eine maximale Breite von ca. 37 cm bis 49 cm auf. Sie kann auch entsprechend der Toleranzen von wenigen Zentimetern kleiner ausgebildet sein.

Die maximale Breite in der Spreizposition kann auch besonders komfortabel für das im Einsatz befindliche Kind 37 cm bis 42 cm mit den entsprechenden Toleranzen betragen.

Die vorgenannten Breitenangaben in Zentimetern sind keine exakten Werte, sondern können gewisse Maßtoleranzen aufweisen, die sich im Rahmen der üblichen Fertigungstoleranzen bewegen, wobei diese maximal ± 0,5 cm betragen.

Allgemein ist ebenfalls auch denkbar, dass die wenigstens zwei Längsholme und die Adapter bzw. Adaptergelenke, von denen sie aufgenommen sind, jeweils eine starre Verbindung aufweisen. Die bei einer Verbreiterung des Einsatzes bewirkten Kräfte im Bereich der Adapter bzw. Adaptergelenke können über die biegbar ausgebildeten Längs- und/oder Querholme aufgenommen und abgeleitet werden. Hierdurch ist ein besonders einfacher und mechanisch stabiler Aufbau möglich, welcher gänzlich auf Gelenke verzichtet.

In einer vorteilhaften Ausgestaltung nach Patentanspruch 14 ist vorgesehen, dass die Adapter jeweils ein Drehgelenk zur winkelveränderlichen Neigung des Rahmens bzgl. seiner aufgespannten Ebene aufweisen. Das Drehgelenk ist hierbei als Adaptergelenk ausgebildet. Die Drehgelenke weisen hierbei eine gemeinsame Drehachse auf, die parallel zur wenigstens einen längenveränderlichen Querverbindung zwischen den Adaptern verläuft. Mithilfe dieser Drehgelenke an den Adaptern bzw. mithilfe der Adaptergelenke kann der Rahmen von einer Sitz- in eine Liegeposition oder umgedreht verbracht werden. Der Rahmen wird hierbei um die Drehachse der Drehgelenke bzw. Adaptergelenke entsprechend geneigt. Vorteilhaft weisen die Drehgelenke Rastmittel auf, sodass die Drehgelenke arretierbar ausgebildet sind. So kann der Rahmen vorteilhaft in einer Sitz- oder Liegeposition arretiert werden. Es ist ebenfalls denkbar, dass zwischen diesen beiden Positionen weitere Rastpositionen vorgesehen sind, um den Rahmen in vorbestimmbaren Winkeln neigen zu können.

Der Einsatz ist vorteilhaft als eine Wanne ausgebildet, in die ein Kind hineingelegt und/oder hineingesetzt werden kann. Die Wanne kann durch Kippen des Rahmens von einer Liegeposition in eine Sitzposition verbracht werden. Die Wanne weist hierbei einen festen Boden in Form einer Bodenplatte mit wenigstens einer Faltachse auf, wobei der Boden im Wesentlichen die Form des Rahmens in seiner Grundposition aufweist und die wenigstens eine Faltachse parallel zur wenigstens einen Querverbindung zwischen den Adaptern verläuft. Beim Verbringen in eine Sitzposition wird der Boden an der wenigstens einen Faltachse gefaltet bzw. angewinkelt. In der Liegeposition ist der Boden der Wanne flach. Weiterhin ist die Wanne aus einem am Rahmen befestigbaren, flexiblen Mittel, wie bspw. Stoff, Segeltuch oder Gewebe, ausgebildet.

In einer vorteilhaften Ausgestaltung ist für das Verbringen des Einsatzes von der Grundposition in die Spreizposition oder entsprechend umgekehrt zwischen den Adaptern an der wenigstens einen längenveränderlichen Querverbindung wenigstens einen Scherenmechanismus vorzusehen. Es ist hierbei zwischen den Adaptern an der wenigstens einen längenveränderlichen Querverbindung wenigstens ein Scherenmechanismus angeordnet, wobei der Scherenmechanismus zwei Hebel aufweist. Ein erster Hebel ist vorteilhaft als gerader Hebel und der andere, zweite Hebel vorteilhaft als gekrümmter Hebel ausgebildet. Dies ist jedoch nicht begrenzend zu verstehen. So können auch beide Hebel gerade oder gekrümmt ausgebildet sein. Der erste Hebel ist mit einem Ende auf einer Seite der wenigstens einen längenveränderlichen Querverbindung drehbeweglich angeordnet. So kann der erste Hebel um seine Hebelachse, da wo er drehbeweglich gelagert ist, verschwenkt werden. Auf der anderen Seite der wenigstens einen längenveränderlichen Querverbindung ist der zweite Hebel mit einem Ende drehbeweglich angeordnet. Das gegenüberliegende Ende dieses Hebels ist wiederum am ersten Hebel drehbeweglich angeordnet. Diese Anordnung bildet den Scherenmechanismus aus. Wird nun der erste Hebel verschwenkt, so wird der Scherenmechanismus geöffnet bzw. geschlossen, je nach Richtung der Hebelbewegung des ersten Hebels. Dabei wird die wenigstens eine längenveränderliche Querverbindung teleskopartig auseinandergeschoben bzw. teleskopartig zusammengeschoben. Vorteilhaft weisen die Hebel Anschlagspunkte auf, sodass der Scherenmechanismus Begrenzungspunkte bezogen auf die mechanisch ausführbaren Bewegungen aufweist. Denkbar ist bspw., dass der zweite Hebel zwei Anschlagspunkte aufweist, an die der erste Hebel anschlägt. Der erste Hebel kann so nur eine erste Position, in welcher der Einsatz in der Grundposition ist, und eine zweite Position, in welcher der Einsatz in der Spreizposition ist, annehmen. Es können aber auch statt Anschlagspunkte auch Rastpunkte vorgesehen sein.

Der hier beschriebene Einsatz ist sowohl für Kinderwagen als auch für Puppenwagen geeignet. Die technischen Merkmale unterscheiden sich zwischen einem Einsatz für einen Kinderwagen und einem Einsatz für einen Puppenwagen nicht. Daher sind mit Nennung von Kinderwagen gleichzeitig auch Puppenwagen und umgekehrt gemeint. Sie können vorteilhaft von einem Einzelwagen in einen Zwillingswagen und umgekehrt verbracht werden.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: Perspektivische Ansicht von schräg oben des Einsatzes in Sitzposition
- Fig. 2: Perspektivische Ansicht von schräg oben des Einsatzes in Liegeposition
- Fig. 3: Ansicht von unten auf den Einsatz in der Spreizposition
- Fig. 4: Ansicht von oben auf den Einsatz in der Spreizposition
- Fig. 5: Ansicht von vorn in Richtung der Längserstreckung des Einsatzes
- Fig. 5a: Ansicht von vorn in Richtung der Längserstreckung des Einsatzes mit Scherenmechanismus in der Grundposition
- Fig. 5b: Ansicht von vorn in Richtung der Längserstreckung des Einsatzes mit Scherenmechanismus in der Spreizposition
- Fig. 6: Perspektivische Ansicht des U-Profils
- Fig. 7: Perspektivische Ansicht des U-Profils in geteilter Form
- Fig. 8: Perspektivische Ansicht einer weiteren Ausführungsform des U-Profils in geteilter Form
- Fig. 9: Detailansicht eines Gelenks aus Fig 8
- Fig. 10: Perspektivische Ansicht der Adapter mit zwei längenveränderlichen Querverbindungen in der Grundposition
- Fig. 11: Perspektivische Ansicht der Adapter mit zwei längenveränderlichen Querverbindungen in der Spreizposition
- Fig. 12: Perspektivische Ansicht des Adapters von schräg unten mit geschlossenem Scherenmechanismus
- Fig. 13: Perspektivische Ansicht des Adapters von schräg unten mit zu einem Viertel geöffnetem Scherenmechanismus
- Fig. 14: Perspektivische Ansicht des Adapters von schräg unten mit halbgeöffnetem Scherenmechanismus
- Fig. 15: Perspektivische Ansicht des Adapters von schräg unten mit vollständig geöffnetem Scherenmechanismus

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

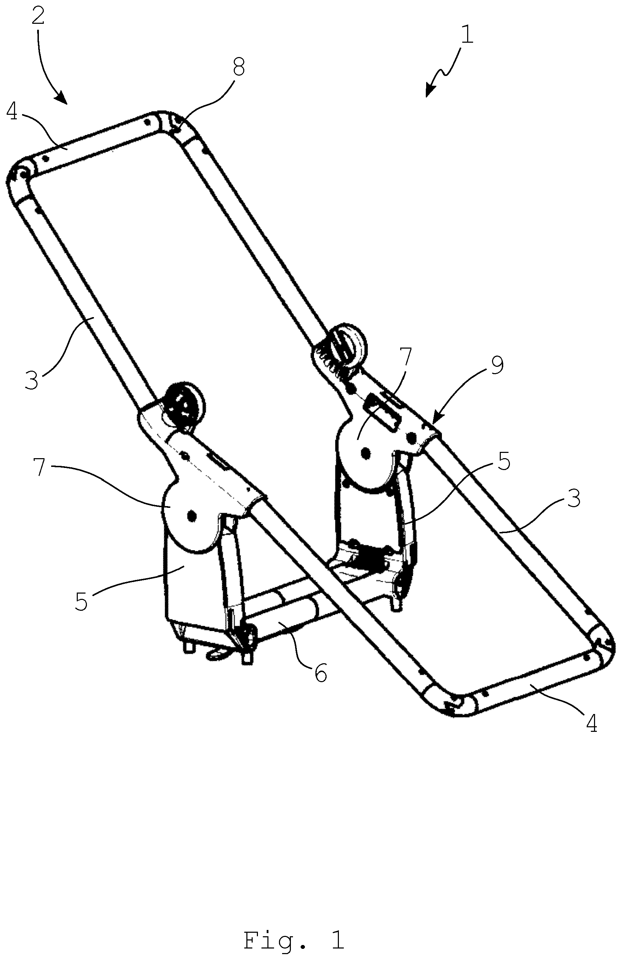

In Fig. 1 ist eine perspektivische Ansicht von schräg oben des Einsatzes 1 zu sehen, wobei sich der Einsatz 1 in einer Sitzposition befindet. Hierbei befindet sich der Rahmen 2 in seiner Längserstreckung in einer geneigten Position in Bezug zur horizontalen Ebene. In der Mitte sind zwei Adapter 5, in der Ausführung nach Fig. 1 mit jeweils einem Adaptergelenk 7, angeordnet, die in ihrer Längserstreckung senkrecht ausgerichtet und parallel zueinander angeordnet sind. Die Adaptergelenke 7 können aber auch entfallen. Die Adapter 5 sind weiterhin mit zwei längenveränderlichen Querverbindungen 6 miteinander verbunden, sodass die beiden Adapter 5 in ihrem Abstand zueinander veränderlich sind. Der Rahmen 2 weist bzgl. der Adapter 5 eine angewinkelte Position auf. Die Adaptergelenke 7 sind am jeweils am oberen Ende der Adapter 5 angeordnet und bilden einen Teil der Adapter 5 aus.

In einer weiteren Ausbildung der Erfindung sind die zwei längenveränderlichen Querverbindungen 6 durch eine einzige längenveränderliche Querverbindung ersetzt.

Die längenveränderlichen Querverbindungen 6 sind in der gezeigten Ausführungsform teleskopartig ausgebildet, wobei in der zusammengeschobenen Darstellung nur die beiden äußeren Hohlprofile zu sehen sind, in die ein drittes mittig angeordnetes Profil aufgenommen ist, welches über Federelemente in den äußeren Hohlprofilen, die auch nicht sichtbar sind, in der Mitte gehalten wird.

Der in Fig 1 gezeigte Einsatz 1 weist außerdem vier Längsholme 3 sowie vier Gelenke 8 und zwei Querholme 4 auf. Jeweils zwei Längsholme 3 sind über zwei Gelenke 8 mit einem Querholm 4 verbunden. Sie bilden hierbei jeweils eine U-Form bzw. ein U-Profil aus, wobei die Schenkel der U-Form von den jeweils beiden Längsholmen 3 ausgebildet werden. Sie sind in der gezeigten Position nicht exakt parallel zueinander ausgerichtet, sondern gehen in Richtung der offenen Schenkelenden der ausgebildeten U-Form V-förmig auseinander. Insgesamt ist der Rahmen 2 aus zwei sich gegenüberliegenden U-Profilen ausgebildet. Die beiden U-Profile sind mit ihren offenen Schenkelenden jeweils an den Adaptern 5, genauer an den Adaptergelenken 7 angeordnet, wobei die offenen Schenkelenden in Gelenken bzw. Aufnahmen 9 an den Adaptern 5 bzw. Adaptergelenken 7 gelenkig aufgenommen und gelagert sind. So können die Schenkel der U-Profile in den Punkten der Gelenke bzw. Aufnahmen 9 bewegt werden. Dies ist insbesondere beim Verändern der Breite des Einsatzes 1 erforderlich.

Bei der Vergrößerung der Breite werden die Adapter 5 gemeinsam mit den längenveränderlichen Querverbindungen 6 auseinandergeschoben. Dabei bewegen sich die in den Aufnahmen 9 der Adapter 5 bzw. Adaptergelenken 7 angeordneten Enden der U-Profile bzw. der Längsholme 3 auseinander. Hierdurch wird die Breite des Rahmens 2 in den Punkten der Aufnahmen 9 an den Adaptern 5 bzw. Adaptergelenken 7 vergrößert. Entsprechend umgekehrt verlaufen die geschilderten Bewegungen bei einer Verringerung der Breite des Rahmens 2. Hierdurch kann der Rahmen 2 von einer breiten Spreizposition in eine weniger Breite Grundposition überführt werden. Vorteilhaft ist die maximale Breite des Rahmens 2 in der Grundposition, also in der zusammengeschobenen Position der längenveränderlichen Querverbindungen 6, maximal 38 cm breit, sodass zwei jeweils in der Grundposition befindliche Einsätze 1 mit Kinderwagengestell, auf dem die Einsätze angeordnet sind, nebeneinander angeordnet nicht breiter als 80 cm sind.

Der Einsatz ist über die Adapter 5 an einem Gestell eines Kinder- oder Puppenwagens über Verbindungselemente anordenbar. Der hier gezeigte Einsatz 1 wird hierbei senkrecht auf die Verbindungselemente am Gestell aufgesetzt, wobei an den Adaptern 5 entsprechend zu den Verbindungselementen korrespondierende Aufnahmen ausgebildet sind.

Um den Rahmen 2 neigen bzw. kippen zu können, weisen die Adapter 5 jeweils ein Drehgelenk in Form eines Adaptergelenks 7 auf, wobei die gemeinsame Drehachse parallel zu den längenveränderlichen Querverbindungen 6 verläuft. Die Neigung bzw. Kippung des Rahmes 2 erfolgt um die Drehachse herum. Vorteilhaft weist das Drehgelenk wenigstens einen Rastmechanismus auf, mit welchem die Neigung des Rahmens 2 auf vorbestimmbare Winkel einstellbar ist. So kann der Rahmen 2 sowohl in der Grundposition als auch in der Spreizposition geneigt werden.

Weiterhin weist der Einsatz 1 einen Boden auf. Der Boden ist vom Rahmen 2 aufgenommen, aber hier in Fig. 1 im Sinne einer besseren Übersichtlichkeit der Abbildung nicht gezeigt. Eine textile Bespannung des Rahmens 2, in welcher der Boden als versteifte Platte mit wenigstens einem Knickfalz eingebracht ist, ist im Sinne einer besseren Darstellung hier ebenfalls weggelassen worden. Der Boden ist über die textile Bespannung am Rahmen 2 mit dem Rahmen 2 verbunden. Der Knickfalz im Boden ist in Höhe der längenveränderlichen Querverbindungen 6 zwischen den Adaptern 5 und parallel zu den längenveränderlichen Querverbindungen 6 angeordnet.

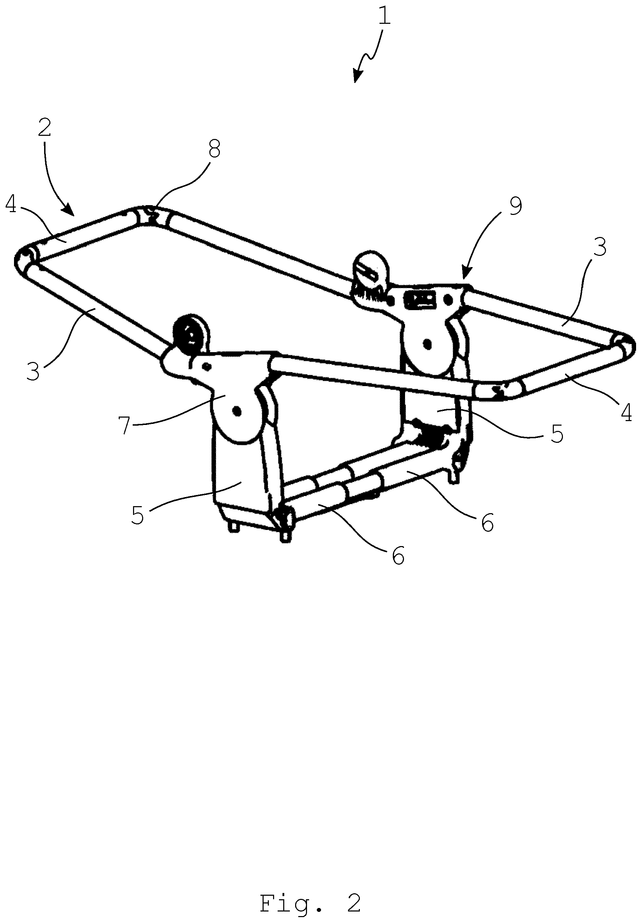

In Fig. 2 ist eine perspektivische Ansicht von schräg oben des Einsatzes 1 in der Liegeposition zu sehen. Der gezeigte Einsatz 1 entspricht dem Einsatz 1 in Fig. 1, wobei der Rahmen 2 bzgl. der Adapter 5 keine Neigung aufweist, sondern sich in einer waagerechten Position befindet. Das heißt, der Rahmen weist gegenüber den senkrecht angeordneten Adaptern 5 einen rechten Winkel auf. In der gezeigten Ansicht befindet sich der Einsatz 1 in der Spreizposition. Es sind die längenveränderlichen Querverbindungen 6 zwischen den Adaptern 5 auseinandergeschoben. Der Rahmen 2 weist in den Punkten der Aufnahmen 9 an den Adaptern 5 bzw. Adaptergelenken 7 maximal eine Breite von 42 cm auf.

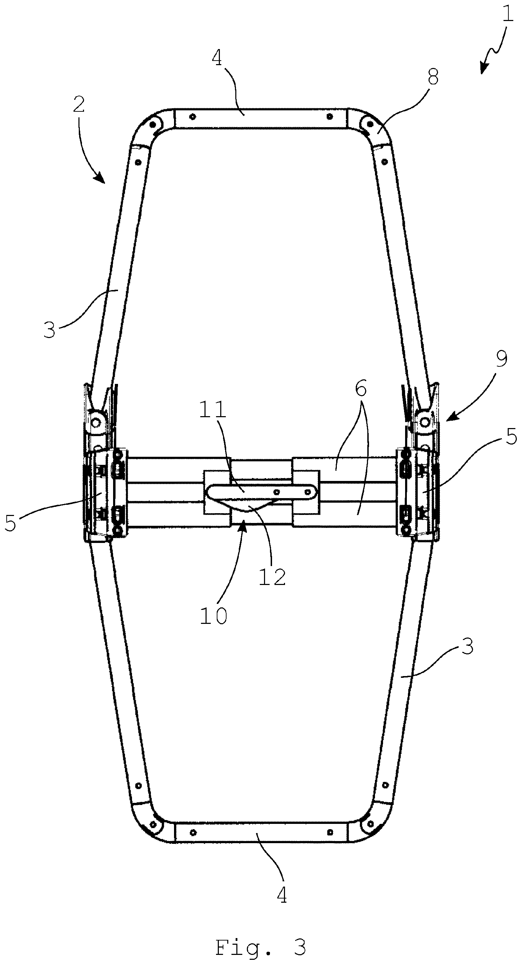

Fig 3 zeigt eine Ansicht von unten auf den Einsatz 1 in der Spreizposition. Es handelt sich ebenfalls um den Einsatz 1 aus den beiden vorherigen Figuren. Der Rahmen 2 bildet im Wesentlichen ein Rechteck mit abgerundeten Ecken aus. Die abgerundeten Ecken werden von Gelenken 8 ausgebildet. Die langen Seiten der Rechteckform werden von vier Längsholmen 3 und die kurzen Seiten von zwei Querholmen 4 ausgebildet. In der Mitte sind zwei sich gegenüberliegende Adapter 5 angeordnet. Die zwei längenveränderlichen Querverbindungen 6 zwischen den Adaptern 5 sind vollständig auseinandergeschoben. Weiterhin ist mittig zwischen den zwei längenveränderlichen Querverbindungen 6 ein Scherenmechanismus 10 bestehend aus einem geraden Hebel 11 und einem gekrümmten Hebel 12 angeordnet. Der Scherenmechanismus 10 hält die längenveränderlichen Querverbindungen 6 auseinandergeschoben und sorgt damit für die Spreizposition des Einsatzes 1.

Die Adapter 5 bzw. die Adaptergelenke 7, die hier von den Adaptern 5 verdeckt werden, verbinden in der Mitte der langen Seiten der Rechteckform des Rahmens 2 über Aufnahmen 9 jeweils zwei Längsholme 3 miteinander. Würde man nun den Einsatz 1 aus seiner Spreizposition in die Grundposition verbringen, so würde der Rahmen 2 in den Punkten der Aufnahmen 9 an den Adaptern 5 bzw. Adaptergelenken 7 in seiner Breite verringert werden. Hierzu würden die Adapter 5 gemeinsam mit dazwischen befindlichen längenveränderlichen Querverbindungen 6 mithilfe des Scherenmechanismus 10 durch Umlegen des geraden Hebels 11 um 180° zusammengeschoben werden.

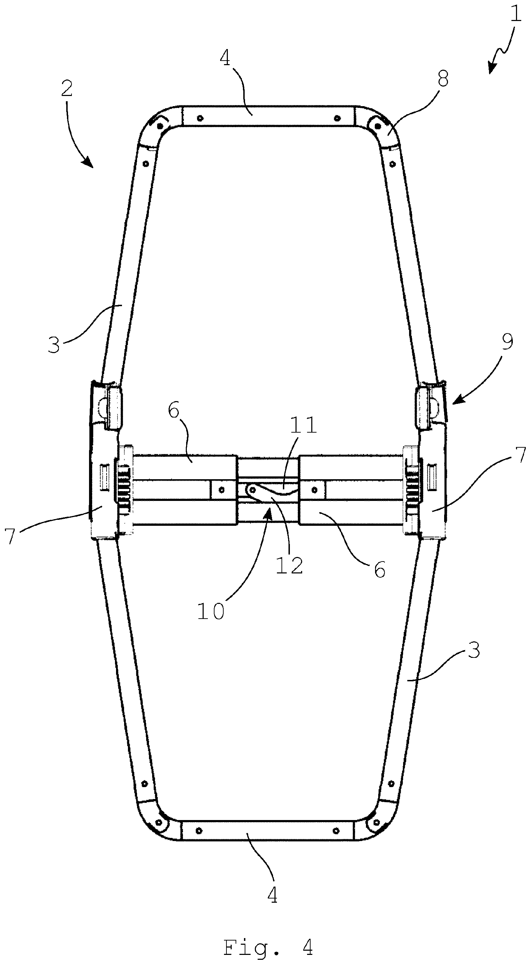

In Fig 4 ist eine Ansicht von oben auf den Einsatz 1 in der Spreizposition gezeigt. Hierbei entspricht der Einsatz 1 dem aus Fig. 3 in der Ansicht von oben. Der Rahmen 2 ist in den Punkten der Aufnahmen 9 an den Adaptergelenken 7 in einer verbreiterten Position. Das heißt, die längenveränderlichen Querverbindungen 6 in der Mitte des Einsatzes 1 sind auseinandergezogen. Die Längsholme 3 sind in dieser Position in den Aufnahmen 9 gegenüber den Adaptergelenken 7 angewinkelt. In der gezeigten Draufsicht ist der Rahmen 2 aus zwei sich gegenüberliegende U-Profile mit V-förmig verlaufenden Schenkeln ausgebildet, die in der Mitte über die Adaptergelenke 7 jeweils an den Seiten miteinander verbunden sind. Die Form kann auch als eine gleichschenklige Trapezform bezeichnet werden, wobei die Ecken abgerundet sind und von Gelenken 8 ausgebildet werden. Die Schenkel der U-Profile bzw. der Trapezformen werden von den Längsholmen 3 ausgebildet. Die Längsholme 3 sind jeweils über die Gelenke 8 und jeweils einem Querholm 4 miteinander verbunden, sodass sie ein U-Profil bzw. ein gleichschenkliges Trapez-Profil ausbilden.

Unterhalb der längenveränderlichen Querverbindungen 6 ist der Scherenmechanismus 10 mit langem Hebel 11 und gekrümmten Hebel 12 angeordnet. Der Scherenmechanismus 10 wird hier zum Teil von den längenveränderlichen Querverbindungen 6 verdeckt.

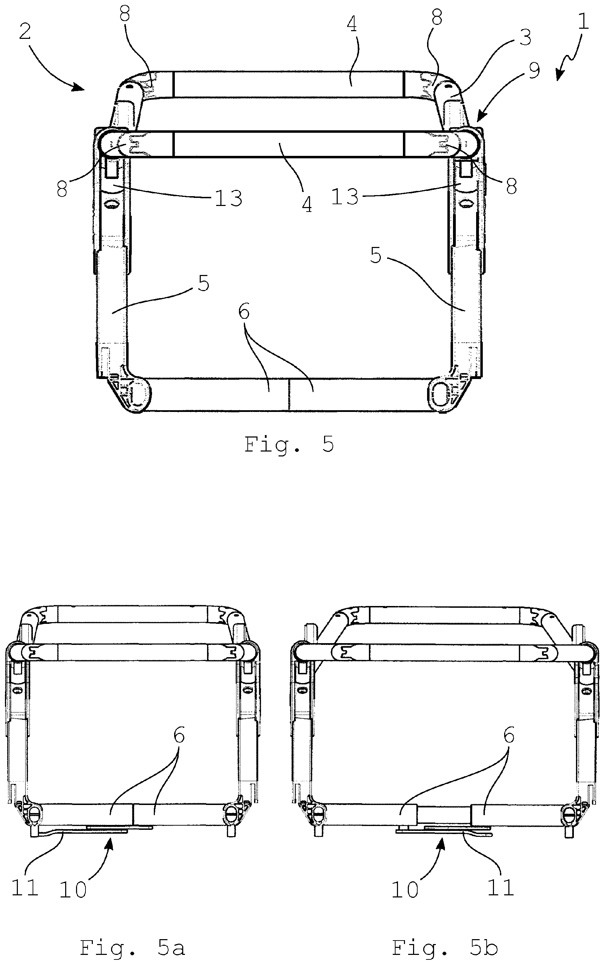

Die Fig. 5 zeigt eine Ansicht von vorn in Richtung der Längserstreckung des Einsatzes 1. Sie zeigt den Einsatz 1 aus Fig 2 in der Frontalansicht. Vorn bzw. frontal beschreibt hier die Sichtebene, welche senkrecht zur Richtung der Längserstreckung des Rahmens 2 verläuft, wobei sich der Betrachter auf der Seite befindet, auf der sich die Füße eines Kindes befinden würden, wenn es im Einsatz 1 läge. Die zwei Adapter 5 mit Adaptergelenken 7 stehen senkrecht nach oben und bilden gemeinsam mit den dazwischen angeordneten längenveränderlichen Querverbindungen 6 eine U-Form bzw. eine gleichschenklige Trapez-Form mit parallelen Schenkeln aus, wobei die Schenkel rechts und links vom Betrachter aus gesehen die Adapter 5 und Adaptergelenke 7 sind. In dieser Ansicht ist nur eine längenveränderliche Querverbindung 6 zu sehen, da die vordere eine dahinter befindliche längenveränderliche Querverbindung 6 verdeckt. Der Scherenmechanismus 10, welcher sich unterhalb der längenveränderlichen Querverbindungen 6 befinden würde, ist in dieser Abbildung nicht dargestellt. Die längenveränderlichen Querverbindungen 6 sind in der gezeigten Darstellung zusammengeschoben, sodass sich der Einsatz 1 in der Grundposition befindet.

Des Weiteren ist an den oberen Enden der Adapter 5 der Rahmen 2 angeordnet. Der Einsatz 1 befindet sich in der gezeigten Ausführung in einer Liegeposition. Der vordere Teil des Rahmens 2 verläuft entlang der Sichtachse, weshalb lediglich ein Querholm 4 mit rechts und links angeordneten Gelenken 8 zu sehen ist. Der hintere Teil des Rahmens, also der vom Betrachter abgewandten Seite, verläuft leicht angewinkelt nach oben, sodass deren Querholm 4 mit Gelenken 8 rechts und links zu sehen ist. Die Gelenke 8 sind außerdem über jeweils einem Längsholm 3 mit den Adaptergelenken 7 rechts und links verbunden.

In dieser Ansicht ist zu erkennen, dass die vom Rahmen 2 aufgespannte Ebene einen Knick aufweist, welcher zwischen den zwei Adaptern 5 bzw. Adaptergelenken 7 parallel zu den längenveränderlichen Querverbindungen 6 zwischen den Adaptern 5 verläuft.

Die Fig. 5a zeigt eine Ansicht von vorn in Richtung der Längserstreckung des Einsatzes 1 mit Scherenmechanismus 10 in der Grundposition. Der Scherenmechanismus 10 bewirkt, dass die längenveränderlichen Querverbindungen 6 vollständig zusammengeschoben sind. Der gerade Hebel 11 zeigt vom Betrachter aus gesehen nach links.

Die Fig. 5b zeigt Ansicht von vorn in Richtung der Längserstreckung des Einsatzes mit Scherenmechanismus in der Spreizposition. Der Scherenmechanismus 10 bewirkt, dass die längenveränderlichen Querverbindungen 6 auseinandergeschoben sind. Hierbei ist der gerade Hebel 11 um 180° gegenüber der Grundposition umgelegt. Der gerade Hebel 11 zeigt vom Betrachter aus gesehen nach rechts.

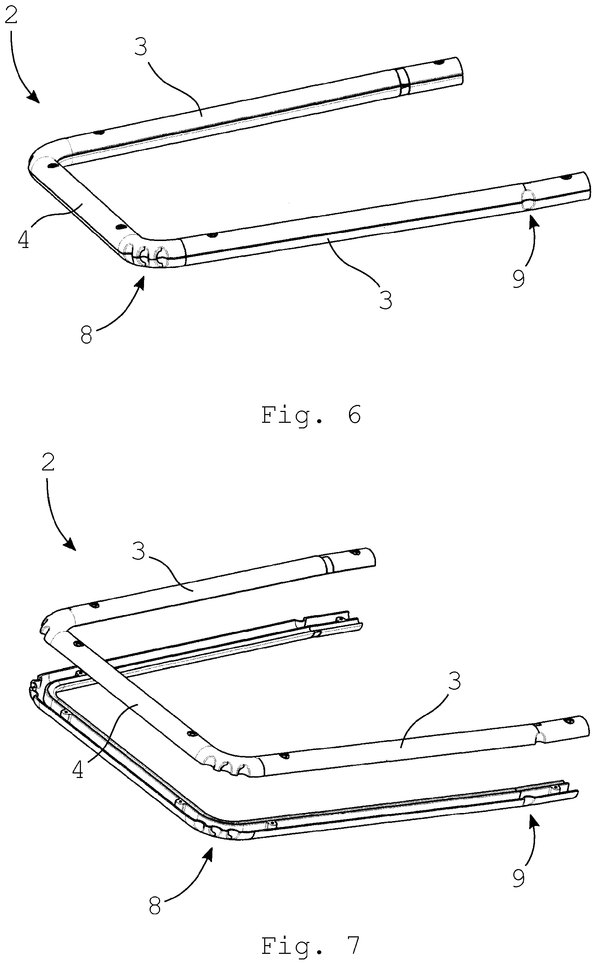

Fig 6 zeigt eine perspektivische Ansicht des U-Profils, wobei das U-Profil im Bereich der Gelenke 8 Einkerbungen aufweist. Das U-Profil ist ein Teil des Rahmens 2. Es ist aus zwei Längsholmen 3, die parallel zueinander angeordnet sind, ausgebildet, die über abgerundete Ecken mit einem Querholm 4 verbunden sind. Längsholme 3 und Querholm 4 sind in der von ihnen aufgespannten Ebene zweiteilig ausgebildet, sodass sich das U-Profil in zwei Hälften, oben und unten, aufteilen lässt. Die abgerundeten Ecken bilden gleichzeitig die Gelenke 8 in Form von elastischen Winkelverbindungen aus. An den beiden offenen Enden des U-Profils sind ebenfalls zwei elastische Gelenke 9 angeordnet, die durch Einkerbungen bzw. Materialaussparungen in den Längsholmen 3 ausgebildet sind. Die Gelenke 9 sind einteilig mit den Längsholmen 3 ausgebildet.

Längsholme 3 und Querholm 4 weisen hier jeweils einen runden Querschnitt auf. Es kann auch von einem Rohrprofil gesprochen werden. Auf der Seite, die zur Mitte der aufgespannten Ebene zeigt, ist das Rohrprofil verstärkt ausgebildet. Das heißt, dass an dieser Stelle das Rohrprofil eine höhere Wandstärke aufweist. In dieser Verstärkung ist eine Aussparung vorgesehen, in die ein Keder eingezogen werden kann, mithilfe dessen wiederum ein flexibles Mittel am Rahmen befestigbar ist.

Fig 7 zeigt eine perspektivische Ansicht des U-Profils mit der innenliegenden Verstärkung in geteilter Form. Das U-Profil ist bereits in Fig. 6 gezeigt, wobei in dieser Ansicht hier die beiden Hälften oben und unten des U-Profils getrennt dargestellt sind, sodass die Verstärkung im Inneren des U-Profils mitsamt der Aussparung sichtbar ist.

In den abgerundeten Ecken zwischen Längsholmen 3 und Querholm 4 weist das Rohrprofil auf der Seite, die der Mitte der aufgespannten Ebene abgewandt ist, Einkerbungen in Form von Wellen auf. Diese Wellenform ermöglicht ein elastisches Verbiegen des U-Profils, wobei die hier gezeigten offenen Enden der Längsholme 3 auseinanderbewegt werden können. Für diese Bewegung sind vorteilhaft keine separaten Gelenke erforderlich. Die in Längsholmen 3 und Querholm 4 auftretenden Biegekräfte werden von den abgerundeten Ecken mit Wellenprofil, die hierdurch Gelenke 8 ausbilden, effektiv aufgenommen. Die Gelenke 8 sind elastische Winkelverbindungen zwischen Längsholmen 3 und Querholm 4, die wiederum einteilig als U-Profil ausgebildet sind. Die offenen Enden des U-Profils weisen gleichermaßen weitere elastische Gelenke 9 auf.

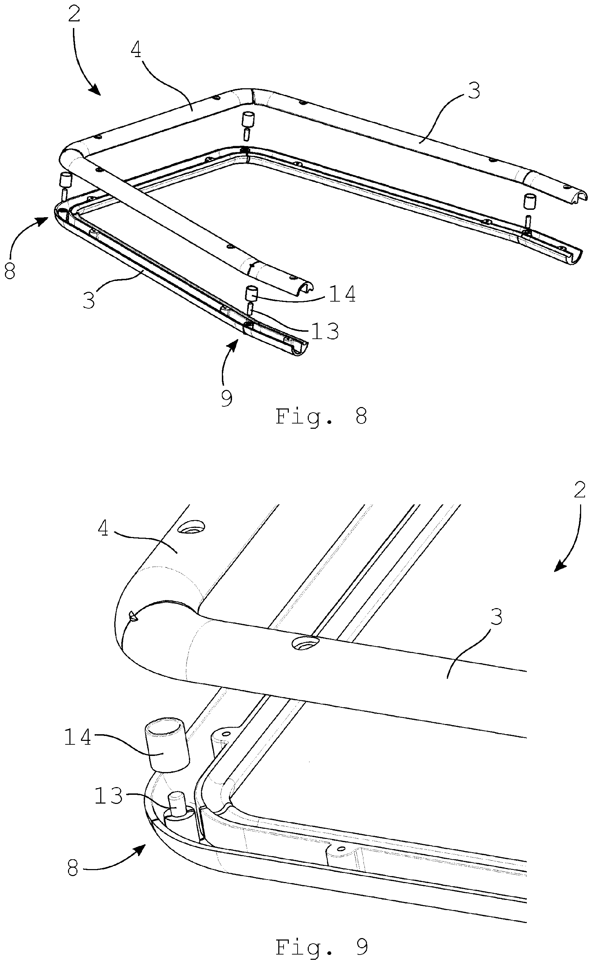

Fig. 8 zeigt eine perspektivische Ansicht einer weiteren Ausführungsform des U-Profils in geteilter Form, wobei das U-Profil im Wesentlichen dem U-Profil aus den Fig. 6 und 7 entspricht, wobei die Gelenke 8, 9 jedoch unterschiedlich ausgeführt sind. Längsholme 3 und Querholm 4 bilden ein U-Profil aus, das ebenfalls einteilig ausgebildet ist, wobei Längsholme 3 und Querholm 4 jeweils über eine elastische abgerundete Winkelverbindung, die gleichzeitig ein Gelenk 8 ausbildet, miteinander einteilig verbunden sind. Die offenen Enden des U-Profils weisen ebenfalls jeweils ein Gelenk 9 auf. Die Gelenke 8, 9 weisen zwei Bolzen 13 auf, die jeweils oben und unten in den beiden Hälften des U-Profils angeordnet bzw. von den beiden Hälften zum Teil aufgenommen sind. Die Bolzen 13 greifen gleichzeitig mit ihren freien Enden, hier von oben bzw. von unten, in eine mittig angeordnete Hülse 14 ein, wobei die Verbindung aus Bolzen 13 und Hülse 14 eine Gleitverbindung ist, die gleichzeitig die Schwenkachse der Gelenke 8, 9 ausbildet. Bolzen 13 und Hülse 14 sind kongruent zueinander ausgebildet, sodass der Innendurchmesser der Hülse 14 im Wesentlichen dem Außendurchmesser der Bolzen 13 entspricht, sodass die Bolzen 13 in die Hülse 14 eingeschoben werden können. Bei einer Winkelverstellung der Gelenke 8, 9 wird um die gemeinsame Achse von Bolzen 13 und Hülse 14 geschwenkt. Die Ausbildung der Gelenke 8, 9 durch eine Kombination aus Bolzen 13 und Hülse 14 ist besonders langlebig und stabil. Vorteilhaft sind die Bolzen 13 und Hülsen 14 der Gelenke 8, 9 aus Kunststoff, Metall oder eine Kombination hieraus ausgebildet.

Fig. 9 zeigt eine Detailansicht eines Gelenks 8 aus Fig. 8. Im Bereich des Bolzens 13 weist das Gelenk 8 eine Materialaussparung in Form einer Kerbe auf. Sie ermöglicht eine Verringerung des Winkels des Gelenks 8 bis die Kerbe geschlossen ist. Die Kerbe bildet somit gleichzeitig einen Winkelanschlag aus, bis zu dem Längsholm 3 und Querholm 4 zusammengeführt werden können. Dies erhöht die Stabilität des gesamten Rahmens 2, da dieser nicht beliebig verformt werden kann. Bspw. können die Kerben in den Gelenken 8 derart ausgebildet sein, dass diese in der Grundposition des Einsatzes 1 vollständig geschlossen sind, so ist der Einsatz 1 bzw. der Rahmen 2 des Einsatzes 1 stabilisiert und kann nicht mehr seitlich verschoben werden.

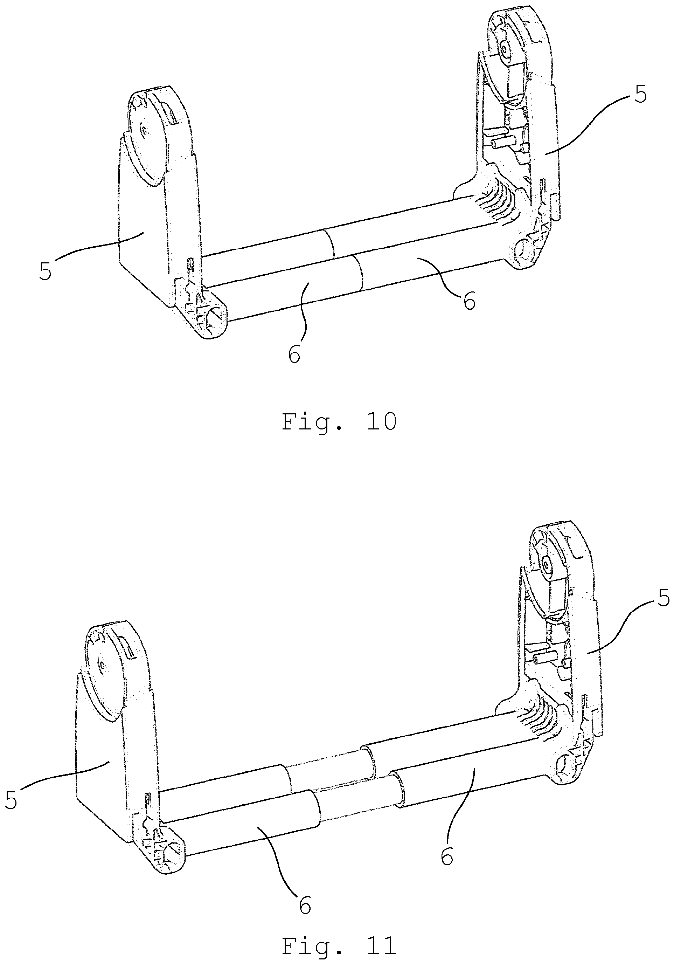

In Fig. 10 ist eine perspektivische Ansicht der Adapter 5 mit zwei längenveränderlichen Querverbindungen 6 in der Grundposition abgebildet. Hierbei sind die längenveränderlichen Querverbindungen 6 vollständig zusammengeschoben. Die Gesamtbreite der gezeigten Anordnung weist hierbei maximal eine Breite von 38 cm auf.

Fig 11 zeigt eine perspektivische Ansicht der Adapter 5 mit zwei längenveränderlichen Querverbindungen 6, welcher bereits in Fig. 10 gezeigt ist, in der Spreizposition. Hierbei sind die längenveränderlichen Querverbindungen 6 auseinandergezogen, wobei die Gesamtbreite der gezeigten Anordnung 37 cm bis 42 cm aufweist. Es ist in dieser Ansicht zu sehen, dass die längenveränderlichen Querverbindungen 6 auf jeder Seite mit dem jeweiligen Adapter 5 einen rechten Winkel ausbilden. Dabei sind die längenveränderlichen Querverbindungen 6 an den Adaptern 5 als Rohre ausgebildet, die in ihrer Mitte ein weiteres Rohr oder einen Vollzylinder aufnehmen. Die äußeren Rohre sind dabei entlang des inneren Rohrs bzw. Vollzylinders entlang der Rotationsachse verschiebbar ausgebildet. Die längenveränderlichen Querverbindungen 6 sind dadurch teleskopartig ausgebildet. Sie sind in den Fig. 10 und 11 jeweils ohne Scherenmechanismus 10 dargestellt. Ein solcher ist nicht zwingend für eine Breitenveränderung des Einsatzes 1 erforderlich. Sie kann auch händisch erfolgen, wobei die Breite des Einsatzes 1 durch das Kinderwagengestell, von dem der Einsatz 1 aufgenommen wird, gehalten wird.

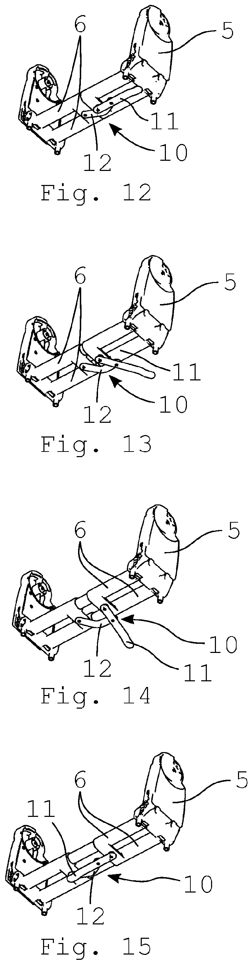

Die Fig. 12-15 zeigen jeweils eine perspektivische Ansicht des Adapters 5 von schräg unten, wobei der Adapter 5 mit den längenveränderlichen Querverbindungen 6 in einer weiteren vorteilhaften Ausführungsform einen Scherenmechanismus 10 aufweist, welcher dazu geeignet ist, einerseits die längenveränderlichen Querverbindungen 6 teleskopartig auseinander- und/oder zusammenzuschieben und andererseits die längenveränderlichen Querverbindungen 6 jeweils in ihrer Position der größten und der kleinsten Längserstreckung zu fixieren. Der Scherenmechanismus 10 ist ebenfalls wie die längenveränderlichen Querverbindungen 6 zwischen den beiden Adaptern 5 angeordnet. Dabei verbindet der Scherenmechanismus 10 eine Seite der längenveränderlichen Querverbindungen 6, welche teleskopartig ausgebildet sind, mit der anderen Seite der längenveränderlichen Querverbindungen 6.

Der Scherenmechanismus 10 weist einen geraden Hebel 11 und einen gekrümmten Hebel 12 auf, wobei der gekrümmte Hebel 12 an einem Ende drehbeweglich am geraden Hebel 11 gelagert ist. Das andere Ende des gekrümmten Hebels 12 ist drehbeweglich an einer Seite der längenveränderlichen Querverbindungen 6 gelagert. An der anderen Seite der längenveränderlichen Querverbindungen 6 ist ein Ende des geraden Hebels 11 drehbeweglich gelagert. Um diesen Lagerpunkt kann der gerade Hebel 11 mit dem gegenüberliegenden freien Ende verschwenkt werden, wobei sie dabei der Scherenmechanismus 10 öffnet bzw. schließt. Das führt dazu, dass wiederum die längenveränderlichen Querverbindungen 6 teleskopartig auseinandergeschoben bzw. zusammengezogen werden. Dadurch werden die Adapter 5 in eine breite Spreizposition bzw. in eine gegenüber der Spreizposition schmalere Grundposition verbracht. Der gerade Hebel 11 lässt sich maximal um 180° um seinen Lagerpunkt an den längenveränderlichen Querverbindungen 6 verschwenken.

In Fig. 12 ist eine perspektivische Ansicht des Adapters 5 von schräg unten mit geschlossenem Scherenmechanismus 10 zu sehen. Hierbei sind die längenveränderlichen Querverbindungen 6 vollständig zusammengeschoben. Der gekrümmte Hebel 12 stößt mit seiner Krümmung an den Lagerpunkt, an dem der gerade Hebel 11 mit einer Seite der längenveränderlichen Querverbindungen 6 gelagert ist. Dadurch ist der gerade Hebel 11 in seiner Schwenkrichtung derart begrenzt, dass dieser nur in eine Richtung umgelegt werden kann. Dieser Ablauf ist in den nachfolgenden Figuren gezeigt. Die Adapter 5 haben hier den kleinsten Abstand zueinander und befinden sich in der Grundposition. Vorteilhaft sind gleichzeitig die längenveränderlichen Querverbindungen 6 in ihrer Position durch den geraden Hebel 11 des Scherenmechanismus 10 arretiert.

Fig. 13 zeigt eine perspektivische Ansicht des Adapters 5 von schräg unten mit zu einem Viertel geöffnetem Scherenmechanismus 10. Die Abbildung entspricht der aus Fig. 12 mit dem Unterschied, dass der gerade Hebel 11 um ca. 45° verschwenkt ist. Bezogen auf den maximalen Schwenk- bzw. Hebelwinkel von 180° entspricht dies einem Verschwenken von einem Viertel. Der Scherenmechanismus 10 ist um ein Viertel geöffnet. Hierbei sind die längenveränderlichen Querverbindungen 6 zu einem Viertel teleskopartig auseinandergeschoben.

Fig 14 zeigt eine perspektivische Ansicht des Adapters 5 von schräg unten mit halbgeöffnetem Scherenmechanismus 10. Die Abbildung entspricht der aus Fig. 12 mit dem Unterschied, dass der gerade Hebel 11 um ca. 90° gegenüber der Lage in der Grundposition, in der die längenveränderlichen Querverbindungen 6 vollständig zusammengeschoben sind, verschwenkt ist. Der Scherenmechanismus 10 ist halb geöffnet. Hierbei sind die längenveränderlichen Querverbindungen 6 zur Hälfte teleskopartig auseinandergeschoben.

Schließlich zeigt die Fig. 15 eine perspektivische Ansicht des Adapters 5 von schräg unten mit vollständig geöffnetem Scherenmechanismus 10. Die Abbildung entspricht der aus Fig. 12 mit dem Unterschied, dass der gerade Hebel 11 um ca. 180° gegenüber der Lage in der Grundposition, in der die längenveränderlichen Querverbindungen 6 vollständig zusammengeschoben sind, verschwenkt ist. Der Scherenmechanismus 10 ist vollständig geöffnet. Hierbei sind die längenveränderlichen Querverbindungen 6 maximal teleskopartig auseinandergeschoben. Die Adapter 5 haben nun den größten Abstand zueinander und befinden sich in der Spreizposition. In dieser Position schlägt der gerade Hebel 11 an einen Anschlag an, welcher sich vom gekrümmten Hebel 12 aus derart erstreckt, dass dieser den geraden Hebel 11 in seiner Schwenkrichtung begrenzt. Ein Verschwenken des Hebels auf mehr als 180° ist so vorteilhaft nicht möglich. Vorteilhaft sind gleichzeitig die längenveränderlichen Querverbindungen 6 in ihrer Position durch den geraden Hebel 11 des Scherenmechanismus 10 arretiert.

Abweichungen von wenigen Grad in den hier beschriebenen Figuren bewegen sich in den für diesen Anwendungsbereich üblichen Toleranzen. Diese können Abweichungen von 0°-10°, vorteilhafter 0°-5° aufweisen.

### Bezugszeichenliste

- 1: Einsatz
- 2: Rahmen
- 3: Längsholm
- 4: Querholm
- 5: Adapter
- 6: längenveränderliche Querverbindung
- 7: Adaptergelenk
- 8: Gelenk
- 9: Gelenk/Aufnahme
- 10: Scherenmechanismus
- 11: gerader Hebel
- 12: gekrümmter Hebel
- 13: Bolzen
- 14: Hülse

## Patentansprüche

1. Einsatz für Kinder- oder Puppenwagen zur Aufnahme wenigstens eines Kindes in eine Sitz- und/oder Liegeposition mit einem obenliegenden, wenigstens zwei Längsholme (3) und wenigstens zwei Querholme (4) aufweisenden Rahmen (2), welcher mit zwei einander gegenüberliegenden Adaptern (5), angeordnet an jeweils wenigstens einem der Längsholme (3), verbunden ist, wobei die Adapter (5) derart ausgebildet sind, um diese mit einem Gestell eines Kinder- oder Puppenwagens zu verbinden,
wobei die Breite des Einsatzes (1) im Bereich der Adapter (5) durch in ihrem Abstand zueinander variierbar ausgebildeten Längsholmen (3) veränderlich ausgebildet ist,
**dadurch gekennzeichnet, dass** zusätzlich zu den wenigstens zwei Querholmen die Adapter (5) über wenigstens eine längenveränderliche Querverbindung (6) miteinander verbunden sind.

2. Einsatz nach Patentanspruch 1, **dadurch gekennzeichnet, dass** die Adapter (5) jeweils ein Adaptergelenk (7) aufweisen.

3. Einsatz nach Patentanspruch 1 oder 2, **dadurch gekennzeichnet, dass** die wenigstens zwei Längsholme (3) und/oder die wenigstens zwei Querholme (4) biegbar und/oder zueinander verwindbar ausgebildet sind.

4. Einsatz nach Patentanspruch 1 oder 2, **dadurch gekennzeichnet, dass** die wenigstens zwei Längsholme (3) und/oder die wenigstens zwei Querholme (4) als einteiliger Rahmen (2) oder als zwei separate, einteilige U-Profile ausgebildet sind, wobei die Schenkel der U-Profile die wenigstens zwei Längsholme (3) sind und wobei die zwei U-Profile in die Adapter (5) oder Adaptergelenke (7) zu einem Rahmen (2) zusammensetzbar sind.

5. Einsatz nach Patentanspruch 1, **dadurch gekennzeichnet, dass** die wenigstens eine längenveränderliche Querverbindung (6) gemeinsam mit den zwei Adaptern (5) U-förmig ausgebildet ist, wobei die Adapter (5) senkrechte Schenkel der U-Form sind.

6. Einsatz nach Patentanspruch 1 oder 2, **dadurch gekennzeichnet, dass** die wenigstens zwei Längsholme (3) mit den wenigstens zwei Querholmen (4) jeweils über ein Gelenk (8) miteinander verbunden sind und/oder die wenigstens zwei Längsholme (3) jeweils über ein Gelenk (9) mit jeweils einem der Adapter (5) oder Adaptergelenke (7) verbunden sind.

7. Einsatz nach Patentanspruch 6, **dadurch gekennzeichnet, dass** die Gelenke (8; 9) als elastisch verformbare Winkelverbindungen zwischen den wenigstens zwei Längsholmen (3) und den wenigstens zwei Querholmen (4) und/oder als elastisch verformbare Längsverbindungen zwischen den wenigstens zwei Längsholmen (3) und Adaptern (5) ausgebildet sind.

8. Einsatz nach Patentanspruch 6, **dadurch gekennzeichnet, dass** die Gelenke (8; 9) am Adapter (5) oder Adaptergelenk (7) als Aufnahmen für die wenigstens zwei Längsholme (3) ausgebildet sind, wobei die Aufnahmen jeweils einen Freiheitsgrad in Quer- und/oder Längsrichtung zu den wenigstens zwei Längsholmen (3) aufweisen.

9. Einsatz nach Patentanspruch 6, **dadurch gekennzeichnet, dass** wenigstens ein Gelenk (8; 9) als ein Drehgelenk ausgebildet ist.

10. Einsatz nach Patentanspruch 6 oder 9, **dadurch gekennzeichnet, dass** die Gelenke (8; 9) wenigstens in einer Ebene drehbeweglich sind.

11. Einsatz nach Patentanspruch 8, 9 oder 10, **dadurch gekennzeichnet, dass** die Gelenke (8; 9) in wenigstens einer Position arretierbar sind.

12. Einsatz nach Patentanspruch 1 oder 2, **dadurch gekennzeichnet, dass** die Breite des Einsatzes (1) im Bereich der Adapter (5) oder Adaptergelenke (7) wenigstens in einem Bereich von 5 cm bis 9 cm veränderbar ist.

13. Einsatz nach Patentanspruch 3, **dadurch gekennzeichnet, dass** die Breite des Einsatzes (1) im Bereich der Adapter (5) oder Adaptergelenke (7) um 7 cm veränderbar ist.

14. Einsatz nach Patentanspruch 1, **dadurch gekennzeichnet, dass** die Adapter (5) jeweils ein Drehgelenk zur winkelveränderlichen Neigung des Rahmens (2) bzgl. seiner aufgespannten Ebene aufweisen.

## Claims

1. Insert for child carriage or doll's pram to hold at least one child in a sitting and/or lying position with an above frame (2) comprising of at least two longitudinal spars (3) and at least two transverse spars (4), which is connected to two opposing adapters (5), each arranged on at least one longitudinal spar (3), wherein the adapter (5) is designed in such way, that it is connectable to a frame of a child carriage or doll's pram, wherein the width of the insert (1) in the area of the adapters (5) is designed to be variable by means of longitudinal spars (3) of variable spacing from one another, **characterized in, that** the adapters (5) are connected to one another via at least one variable-length cross connection (6).

2. Insert according to patent claim 1, **characterized in, that** the adapter (5) has an adapter joint (7).

3. Insert according to patent claim 1 or 2, **characterized in, that** the at least two longitudinal spars (3) and/or the at least two transverse spars (4) are designed to be bendable and/or twistable in relation to each other.

4. Insert according to patent claim 1 or 2, **characterized in, that** the at least two longitudinal spars (3) and/or the at least two transverse spars (4) are designed to be a one-piece frame (2) or two separate one-piece u profiles, wherein at least two longitudinal spars (3) are the legs of the u-profiles and wherein the two u-profiles are composable into adapters (5) or adapter joints (7) to a frame (2).

5. Insert according to patent claim 1, **characterized in, that** the at least one variable-length cross-section (6) alongside the two adapters (5) is designed to be u-shaped, wherein the adapters (5) are legs of the u-shape.

6. Insert according to patent claim 1 or 2, **characterized in, that** the at least two longitudinal spars (3) are each connected to the at least two transverse spars (4) via a joint (8) and/or the at least two longitudinal spars (3) are each connected to adapter (5) or adapter joint (7) via a joint (9).

7. Insert according to patent claim 6, **characterized in, that** the joints (8; 9) are designed to be elastically deformable angle connections between the at least two longitudinal spars (3) and the at least two transverse spars (4) and/or elastically deformable longitudinal connections between the at least two longitudinal spars (3) and adapters (5).

8. Insert according to patent claim 6, **characterized in, that** the joints (8; 9) at the adapter (5) or adapter joints (7) are designed as a receptacle for the at least two longitudinal spars (3), wherein the receptacle each have a degree of freedom in the transverse and/or longitudinal direction to the at least two longitudinal spars (3).

9. Insert according to patent claim 6, **characterized in, that** at least a joint (8; 9) is designed to be a rotational joint.

10. Insert according to patent claim 6 or 9, **characterized in, that** the joint (8; 9) are at least rotatable in one plane.

11. Insert according to patent claim 8, 9 or 10, **characterized in, that** the joints (8; 9) are lockable in at least one position.

12. Insert according to patent claim 1 or 2, **characterized in, that** the width of the insert (1) is modifiable in the area of the adapters (5) or the adapter joints (7) at least in a range of 5 cm to 9 cm.

13. Insert according to patent claim 3, **characterized in, that** the width of the insert (1) is modifiable by 7 cm in the area of the adapters (5) or the adapter joints (7).

14. Insert according to patent claim 1, **characterized in, that** the adapters (5) each have a rotational joint for the angle-variable inclination of the frame (2) with respect to its clamped plane.

## Revendications

1. Pièce rapportée pour voiture d'enfant ou de poupée servant à la réception d'au moins un enfant dans une position assise et/ou couchée, comportant un cadre (2) supérieur présentant au moins deux longerons (3) et au moins deux traverses (4), lequel est relié à deux adaptateurs opposés (5), disposés sur respectivement au moins l'un des longerons (3), les adaptateurs (5) étant réalisés pour relier ceux-ci à un châssis d'une voiture d'enfant ou de poupée,
la largeur de la pièce rapportée (1) étant réalisée de manière modifiable dans la région des adaptateurs (5) par le biais de longerons (3) réalisés de manière variable en termes de leur distance l'un par rapport à l'autre, **caractérisée en ce qu'**en plus des au moins deux traverses, les adaptateurs (5) sont reliés l'un à l'autre par le biais d'au moins une liaison transversale (6) de longueur modifiable.

2. Pièce rapportée selon la revendication 1, **caractérisée en ce que** les adaptateurs (5) présentent respectivement une articulation d'adaptateur (7).

3. Pièce rapportée selon la revendication 1 ou 2, **caractérisée en ce que** les au moins deux longerons (3) et/ou les au moins deux traverses (4) sont réalisés de manière à pouvoir être pliés et/ou de manière à pouvoir être tordus les uns par rapport aux autres.

4. Pièce rapportée selon la revendication 1 ou 2, **caractérisée en ce que** les au moins deux longerons (3) et/ou les au moins deux traverses (4) sont réalisés sous forme de cadre (2) d'une seule pièce ou sous forme de deux profilés en U d'une seule pièces, distincts, les branches des profilés en U étant les au moins deux longerons (3) et les deux profilés en U pouvant être assemblés dans les adaptateurs (5) ou les articulations d'adaptateur (7) pour former un cadre (2).

5. Pièce rapportée selon la revendication 1, **caractérisée en ce que** l'au moins une liaison transversale (6) de longueur modifiable est réalisée en forme de U conjointement avec les deux adaptateurs (5), les adaptateurs (5) étant les branches verticales de la forme en U.

6. Pièce rapportée selon la revendication 1 ou 2, **caractérisée en ce que** les au moins deux longerons (3) sont reliés les uns aux autres à l'aide des au moins deux traverses (4) respectivement par le biais d'une articulation (8) et/ou les au moins deux longerons (3) sont reliés à respectivement l'un des adaptateurs (5) ou l'une des articulation d'adaptateur (7) respectivement par le biais d'une articulation (9).

7. Pièce rapportée selon la revendication 6, **caractérisée en ce que** les articulations (8 ; 9) sont réalisées sous forme de liaisons angulaires déformables élastiquement entre les au moins deux longerons (3) et les au moins deux traverses (4) et/ou sous forme de liaisons longitudinales déformables élastiquement entre les au moins deux longerons (3) et les adaptateurs (5).

8. Pièce rapportée selon la revendication 6, **caractérisée en ce que** les articulations (8 ; 9) sur l'adaptateur (5) ou l'articulation d'adaptateur (7) sont réalisées sous forme de logements pour les au moins deux longerons (3), les logements présentant respectivement un degré de liberté dans la direction transversale et/ou longitudinale par rapport aux au moins deux longerons (3) .

9. Pièce rapportée selon la revendication 6, **caractérisée en ce qu'**au moins une articulation (8 ; 9) est réalisée sous la forme d'une articulation rotative.

10. Pièce rapportée selon la revendication 6 ou 9, **caractérisée en ce que** les articulations (8 ; 9) sont mobiles en rotation au moins dans un plan.

11. Pièce rapportée selon la revendication 8, 9 ou 10, **caractérisée en ce que** les articulations (8 ; 9) peuvent être bloquées dans au moins une position.

12. Pièce rapportée selon la revendication 1 ou 2, **caractérisée en ce que** la largeur de la pièce rapportée (1) dans la région des adaptateurs (5) ou des articulations d'adaptateur (7) est modifiable au moins dans une plage de 5 cm à 9 cm.

13. Pièce rapportée selon la revendication 3, **caractérisée en ce que** la largeur de la pièce rapportée (1) dans la région des adaptateurs (5) ou des articulations d'adaptateur (7) est modifiable de 7 cm.

14. Pièce rapportée selon la revendication 1, **caractérisée en ce que** les adaptateurs (5) présentent respectivement une articulation rotative pour l'inclinaison modifiable angulairement du cadre (2) ou de son plan sous-tendu.
